# EUROPÄISCHE PATENTSCHRIFT

(11) **EP 2 785 537 B1**
(45) Veröffentlichungstag und Bekanntmachung des Hinweises auf die Patenterteilung: **21.10.2015**
(21) Anmeldenummer: 12790494.4
(22) Anmeldetag: 12.11.2012
(51) Int. Cl.: B60C 11/12, B60C 11/03

(54) **FAHRZEUGLUFTREIFEN**
PNEUMATIC VEHICLE TYRE
PNEUMATIQUE DE VÉHICULE

(30) Priorität: 01.12.2011 DE 102011055913
(43) Veröffentlichungstag der Anmeldung: 08.10.2014
(73) Patentinhaber: Continental Reifen Deutschland GmbH, 30165 Hannover (DE)
(72) Erfinder: SENG, Matthias, 30449 Hannover (DE); DIENSTHUBER, Franz, 30559 Hannover (DE)
(74) Vertreter: Finger, Karsten
(86) Internationale Anmeldenummer: PCT/EP2012/072362
(87) Internationale Veröffentlichungsnummer: WO 2013/079303

(56) Entgegenhaltungen:
- EP-A1- 0 788 899
- EP-A2- 1 170 152
- DE-A1-102005 042 569
- DE-A1-102010 005 840

## Beschreibung

Die Erfindung betrifft einen Fahrzeugluftreifen für Personenkraftwagen, insbesondere für den Einsatz unter winterlichen Fahrbedingungen, mit einem Laufstreifenprofil mit zumindest einer in Umfangsrichtung umlaufenden mittleren Blockreihe, deren Profilblöcke jeweils mit zumindest drei im Wesentlichen parallel zueinander und im Wesentlichen in Laufstreifenquerrichtung verlaufenden Einschnitten geringer Breite versehen sind, welche in Draufsicht zumindest abschnittsweise einen wellen- oder zick-zack-förmigen Verlauf aufweisen, wobei die Profilblöcke innerhalb von gleichartigen Pitches angeordnet sind, welche in zumindest zwei unterschiedlichen Umfangslängen vorgesehen sind, wobei die Profilblöcke entsprechend der Pitchlängen zumindest zwei unterschiedliche Umfangslängen innerhalb eines Bereiches von 30 mm bis 50 mm aufweisen.

Fahrzeugluftreifen mit derart ausgeführten Laufstreifenprofilen sind in unterschiedlichen Ausführungsvarianten bekannt. Solche Laufstreifenprofile können laufrichtungsgebunden, nicht laufrichtungsgebunden und/oder als asymmetrische Profile ausgeführt sein. Aus der DE 10 2005 042 569 A1 sind Ausführungsvarianten von Laufstreifen bekannt, welche durch Quernuten, Umfangsrillen und Schrägrillen in Profilblöcke gegliedert sind, die jeweils mit einer Vielzahl von Einschnitten versehen sind. Andere Ausführungsformen von Laufstreifen mit zumindest abschnittsweise zick-zack- oder wellenförmig verlaufenden Einschnitten in Profilblöcken sind aus der EP-B 0 715 972, der DE A 197 05 156 und der EP-B-0 729 854 bekannt. Die Einschnitte in den Profilblöcken eines Laufstreifens sind für einen guten Wintergriff, insbesondere auf Schnee und Eis, unerlässlich. Durch die mit der Pitchlängenvariation einhergehenden unterschiedlichen Umfangslängen der Profilblöcke werden in Profilblöcken größerer Umfangslänge üblicherweise mehr Einschnitte angeordnet, als in Profilblöcken mit geringerer Umfangslänge. In Profilblöcken größerer Umfangslänge ist ferner die Umfangssteifigkeit höher als in Profilblöcken mit einer kleineren Umfangslänge. Diese unterschiedlichen Umfangssteifigkeiten der Profilblöcke wirken sich nun einerseits negativ auf die Wintereigenschaften aus und können einen unregelmäßigen Abrieb zur Folge haben.

Der Erfindung liegt die Aufgabe zugrunde, bei einem Reifen der eingangs genannten Art durch eine konstruktiv einfache Maßnahme die Umfangssteifigkeit der Profilblöcke innerhalb einer Profilblockreihe zu vergleichmäßigen.

Gelöst wird die gestellte Aufgabe erfindungsgemäß dadurch, dass die Profilblöcke in Pitches, welche länger sind als der kürzeste Pitch, jeweils zumindest einen mittleren Einschnitt aufweisen, welcher am Einschnittgrund einen sich in radialer Richtung erstreckenden Abschnitt aufweist, welcher durch ebene Gleitflächen begrenzt ist, wobei der Anteil der Gleitflächen an der Gesamtschnittfläche des Einschnittes vom gewählten Pitchlängenverhältnis abhängt und bei größeren Pitchlängenverhältnissen größer ist, wobei sich in den anderen Einschnitten des Profilblockes die Zick-Zack- oder Wellenform bis zum Einschnittgrund erstreckt.

Durch diese einfache Maßnahme in der Ausgestaltung zumindest eines mittleren Einschnittes wird die Umfangssteifigkeit längerer Profilblöcke - die eine größere Umfangssteifigkeit aufweisen - reduziert. Bei entsprechender Auslegung der erfindungsgemäßen Maßnahme kann eine gleichmäßige Umfangssteifigkeit der Profilblöcke innerhalb einer Profilblockreihe erreicht werden.

Gemäß der Erfindung wird vor allem der oder einer der im zentralen Bereich eines Profilblockes verlaufende Einschnitt mit den erwähnten Gleitflächen versehen. Die zentrale Anordnung dieses besonderen Einschnittes ist für eine über die Umfangslänge des Profilblockes gleichmäßige Umfangssteifigkeit von Vorteil.

Je nach tatsächlicher Umfangslänge des jeweiligen Profilblockes kann der Anteil jeder Gleitfläche an der Gesamtschnittfläche des Einschnittes variieren und insbesondere zwischen 8 % und 55 % der Gesamtschnittfläche betragen. Für die Größe der Gleitflächen ist vor allem das Pitchlängenverhältnis, das Verhältnis zwischen dem kürzesten zum längsten Pitch, maßgebend. Für die üblichen Pitchlängenverhältnisse haben sich bestimmte Anteile an den Gleitflächen als besonders vorteilhaft für die Vergleichmäßigung der Umfangssteifigkeit der Profilblockreihe erwiesen.

Bei einem Pitchlängenverhältnis von 1:1,16 sollte der Anteil jeder Gleitfläche an der Gesamtschnittfläche des Einschnittes zwischen 8 % und 12 % betragen. Bei einem Pitchlängenverhältnis von 1:1,2 ist es von Vorteil, wenn der Anteil jeder Gleitfläche an der Gesamtschnittfläche des Einschnittes zwischen 11 % und 15 % beträgt, bei einem Pitchlängenverhältnis von 1:1,353 sollte der Anteil jeder Gleitfläche an der Gesamtschnittfläche des Einschnittes zwischen 20 % und 25 % betragen.

Auch bei größeren Pitchlängenverhältnissen lässt sich die Erfindung gleichermaßen vorteilhaft einsetzen, wobei bei einem Pitchlängenverhältnis von 1:1,4 der Anteil jeder Gleitfläche an der Gesamtschnittfläche des Einschnittes zwischen 23 % und 30 % und bei einem Pitchlängenverhältnis von 1:1,6 zwischen 45 % und 55 % betragen sollte. Bei Profilblöcken besonders großer Umfangslänge ist es vorteilhaft, wenn der jeweilige Gleitflächenanteil auf zwei im zentralen Bereich des Profilblocks verlaufende Einschnitte aufgeteilt wird.

Weitere Merkmale, Vorteile und Einzelheiten der Erfindung werden nun anhand der schematischen Zeichnung, die ein Ausführungsbeispiel darstellt, näher beschrieben.

Dabei zeigen
Fig. 1 eine Draufsicht auf eine Profilblockreihe eines Laufstreifens eines Fahrzeugluftreifens und
Fig. 2 einen Schnitt durch einen Einschnitt in einem Profilblock der Fig. 1 entlang der Linie II-II der Fig. 1.

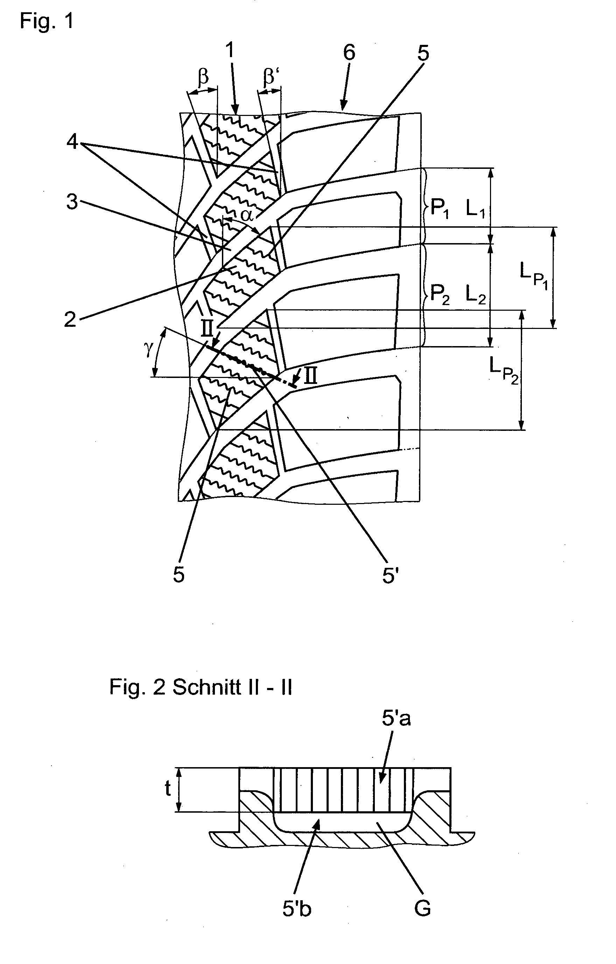

Die Erfindung befasst sich mit einer besonderen Ausführung von Einschnitten in Profilblöcken in zumindest einer Blockreihe eines Laufstreifens eines Fahrzeugluftreifens in Radialbauart, insbesondere eines Winterreifens für Personenkraftwagen. Fig. 1 zeigt beispielhaft einen Umfangsabschnitt einer in Umfangsrichtung des Laufstreifens umlaufenden im mittleren Bereich des Laufstreifens befindlichen Profilblockreihe 1 mit Profilblöcken 2. Die zu beiden Seiten der Profilblockreihe 1 anschließenden Profilelemente sind bei der gezeigten Ausführungsform ebenfalls Profilblockreihen, eine dieser Blockreihen ist eine angedeutete Schulterblockreihe 6. Eine erfindungsgemäß ausgeführte Profilblockreihe kann mit nicht erfindungsgemäß ausgeführten Profilblockreihen oder Profilbändern in einem Laufstreifen kombiniert sein.

Die Profilblöcke 2 der gezeigten Profilblockreihe 1 sind in Draufsicht im Wesentlichen parallelogrammförmig gestaltet und voneinander durch Schrägrillen 3 getrennt. Die Schrägrillen 3 und damit die diese begrenzenden Blockkanten der Profilblöcke 2 schließen mit der Umfangsrichtung einen Winkel α ein, welcher für sämtliche Blockkanten zumindest im Wesentlichen gleich groß ist und in der Größenordnung von 30° bis 50° beträgt. Die beiden weiteren Blockkanten der Profilblöcke 2 sind jeweils unter einem kleinen spitzen Winkel β, β' gegenüber der Umfangsrichtung geneigt, welche Winkel β, β' beispielsweise zwischen 5° und 15° betragen. Ihre Neigung bzw. ihr Verlauf bestimmt den Verlauf und die Neigung der in Fig. 1 angedeuteten Umfangsrillen 4.

Das Laufstreifenprofil gemäß der Erfindung ist, wie es üblich ist, zur Erzielung eines unauffälligen und möglichst geringen Abrollgeräusches geräuschoptimiert ausgelegt und dazu in sogenannte Pitches gegliedert. Bei der dargestellten Ausführungsvariante sind zwei Pitches P₁ und P₂ unterschiedlicher Umfangslängen vorgesehen, wobei das Pitch P₁ die Umfangslänge L₁ und das Pitch P₂ die Umfangslänge L₂ aufweist. Wie bekannt werden die Pitches über den Reifenumfang gemäß einer sogenannten Pitchfolge angeordnet, wobei die Gesamtanzahl der Pitches über den Reifenumfang bei einem PKW-Winterreifen in der Größenordnung von 65 bis 90 beträgt. In einer Pitchfolge können an manchen Stellen des Reifenumfanges zwei oder mehr Pitches gleicher Länge hintereinander angeordnet sein. Zu jedem Pitch P₁ und P₂ gehören in der dargestellten Profilblockreihe 1 ein Profilblock 2 und eine der angrenzenden Schrägrillen 3. Die Profilblöcke 2, die in einem Pitch P₁ enthalten sind, weisen eine Umfangslänge LP₁, die Profilblöcke 2, die zu einem Pitch P₂ gehören, weisen eine Umfangslänge LP₂ auf. Die Umfangslängen LP₁ und LP₂ bewegen sich bei erfindungsgemäß ausgeführten Laufstreifenprofilen im Bereich von 30 mm bis 50 mm, insbesondere von 35 mm bis 45 mm. Die Umfangslänge LP₂ ergibt aus dem Pitchlängenverhältnis, dem Verhältnis der Länge des kürzesten Pitches zur Länge des längsten Pitches. Insbesondere sind die Verhältnisse 1:1,16, 1:1,2, 1:1,3, 1:1,4 und 1:1,6 üblich. Das Verhältnis der Längen zwischen dem kürzesten und dem längsten Pitch beträgt daher vorzugsweise zwischen 1:1,16 und 1:1,6. Werden Pitches mit drei oder auch mehr unterschiedlichen Umfangslängen vorgesehen, befindet sich das Verhältnis zwischen kürzestem und längstem Pitch in einem der erwähnten Bereiche, das Verhältnis der Pitchlängen mittlerer Pitches zum Kürzesten bzw. Längstem liegt jeweils dazwischen.

Die Profilblöcke 2 sind jeweils mit einer Anzahl von in Draufsicht zumindest in ihrem mittleren Abschnitt wellen- bzw. zick-zack-förmig verlaufenden Einschnitten 5, 5' versehen. In Profilblöcken 2 der Umfangslänge LP1 befinden sich nur Einschnitte 5, bei der gezeigten Ausführungsform fünf pro Block 2. In Profilblöcken 2 der Länge LP₁ sind sechs Einschnitte 5 und ein Einschnitt 5' vorgesehen. Die Einschnitte 5, 5' erstrecken sich zumindest im Wesentlichen parallel zueinander und im Wesentlichen in Laufstreifenquerrichtung. Bei der gezeigten Ausführungsform schließen Geraden in Erstreckungsrichtung der Einschnitte 5, 5' mit der Laufstreifenquerrichtung einen Winkel γ in der Größenordnung von 15° ein, wobei γ in jedem Fall ≤ 45° gewählt wird. Die Breite der Einschnitte 5, 5' beträgt zwischen 0,4 mm und 0,8 mm. Die Einschnitte 5, 5' erstrecken sich in radialer Richtung von der Profilblockoberseite in das Profilblockinnere hinein. Die Einschnitte 5 sind Einschnitte, deren Wellenform bis zum Einschnittgrund erhalten bleibt. Zumindest einer der mittleren Einschnitte ist ein Einschnitt 5', welcher nur bis auf eine gewisse Profiltiefe, wie nun anhand der Fig. 2, die einen der Einschnittwände zeigt, näher erläutert wird, eine Wellenform aufweist. Der die Wellenform aufweisende Abschnitt 5'a erstreckt sich bis zu einer konstanten Tiefe t. In der Tiefe t schließt ein Einschnittabschnitt 5'b an, welcher von zwei ebenen Flächen - Gleitflächen G - begrenzt ist. In einem Schnitt durch den Einschnittabschnitt 5'b parallel zur Profiloberseite ergäbe sich ein gerader Verlauf des Einschnittes 5'. Der bis in die Tiefe t reichende wellenförmige Abschnitt 5'a und der Abschnitt 5'b ergeben gemeinsam in Projektion auf die mittlere Schnittebene durch den Einschnitt 5' eine Gesamtschnittfläche F. Die Gleitflächen G verringern die Umfangssteifigkeit des Profilblockes 2 und haben daher den Effekt, die Umfangssteifigkeit von in Umfangsrichtung langen Profilblöcken 2 derart zu beeinflussen, dass diese an die Umfangssteifigkeit der kürzeren Profilblöcke 2 angeglichen wird. Dabei ist es Wesentlich, den Anteil der Gleitflächen G an der Gesamtschnittfläche F entsprechend an die Umfangslänge des Profilblockes 2 anzupassen. Gemäß der Erfindung beträgt bei einem Pitchlängenverhältnis von 1:1,16 der Anteil an jeder Gleitfläche G im Einschnitt 5' insbesondere 10 %. Bei einem Pitchlängenverhältnis von 1:1,6 kann ein Einschnitt 5' mit einem Gleitflächenanteil von insbesondere 50 % oder es können zwei Einschnitte 5' vorgesehen werden, welche jeweils einen Gleitflächenanteil von etwa 25 % aufweisen. In der nachfolgenden Tabelle 1 sind zu bevorzugten Pitchlängenverhältnissen jeweils die Anzahl der Einschnitte 5'und die Anteile jeder Gleitfläche G an der Gesamtschnittfläche F angegeben.

**Tabelle 1**

| **Pitchlängenverhältnis** | **Anzahl der Einschnitte 5'** | **Gleitflächenanteil** |
|---|---|---|
| 1:1,16 | 1 | 8 % bis 12 %, insbesondere 10 % |
| 1:1,2 | 1 | 11 % bis 15 %, insbesondere 13 % |
| 1:1,353 | 1 | 20 % bis 25 %, insbesondere 23 % |
| 1:1,4 | 1 | 23 % bis 30 %, insbesondere 26 % |
| 1:1,6 | 1 oder 2 | 40 % bis 55 %, insbesondere 50 % |

Die gemäß der Erfindung erzielbare gleichmäßige Umfangssteifigkeit der Profilblöcke 2 innerhalb einer Profilblockreihe wirkt sich nicht nur positiv auf die Wintereigenschaften aus sondern unterstützt auch einen gleichmäßigen Abrieb.

### Bezugsziffernliste

- 1: Blockreihe
- 2: Profilblock
- 3: Schrägrille
- 4: Umfangsrille
- 5: Einschnitt
- 5': Einschnitt
- 5'a: Abschnitt
- 5'b: Abschnitt
- 6: Schulterblockreihe
- F: Gesamtschnittfläche
- G: Gleitfläche
- L₁: Umfangslänge
- L₂: Umfangslänge
- LP₁: Umfangslänge
- LP₂: Umfangslänge
- P₁: Pitch
- P₂: Pitch
- α: Winkel
- β: Winkel
- β': Winkel
- γ: Winkel

## Patentansprüche

1. Fahrzeugluftreifen für Personenkraftwagen, insbesondere für den Einsatz unter winterlichen Fahrbedingungen, mit einem Laufstreifenprofil mit zumindest einer in Umfangsrichtung umlaufenden mittleren Blockreihe (1), deren Profilblöcke (2) jeweils mit zumindest drei im Wesentlichen parallel zueinander und im Wesentlichen in Laufstreifenquerrichtung verlaufenden Einschnitten (5, 5') geringer Breite versehen sind, welche in Draufsicht zumindest abschnittsweise einen wellen- oder zick-zack-förmigen Verlauf aufweisen, wobei die Profilblöcke (2) innerhalb von gleichartigen Pitches (P₁, P₂) angeordnet sind, welche in zumindest zwei unterschiedlichen Umfangslängen (LP₁, LP₂) vorgesehen sind, wobei die Profilblöcke (2) entsprechend der Pitchlängen (L₁, L₂) zumindest zwei unterschiedliche Umfangslängen (LP₁, LP₂) innerhalb eines Bereiches von 30 mm bis 50 mm aufweisen,
**dadurch gekennzeichnet,**
**dass** die Profilblöcke (2) in Pitches (P₂), welche länger als der kürzeste Pitch (P₁) sind, jeweils zumindest einen mittleren Einschnitt (5') aufweisen, welcher am Einschnittgrund einen sich in radialer Richtung erstreckenden Abschnitt (5'b) aufweist, welcher durch ebene Gleitflächen (G) begrenzt ist, wobei der Anteil der Gleitflächen (G) an der Gesamtschnittfläche (F) des Einschnittes (5') vom gewählten Pitchlängenverhältnis abhängt und bei größeren Pitchlängenverhältnissen größer ist, wobei sich in den anderen Einschnitten im Profilblock (2) die Zick-Zack- oder Wellenform bis zum Einschnittgrund erstreckt.

2. Fahrzeugluftreifen nach Anspruch 1, **dadurch gekennzeichnet, dass** zumindest der/einer im zentralen Bereich des Profilblockes (2) verlaufende Einschnitt (5') mit Gleitflächen (G) versehen ist.

3. Fahrzeugluftreifen nach Anspruch 1 oder 2, **dadurch gekennzeichnet, dass** der Anteil jeder Gleitfläche (G) an der Gesamtschnittfläche (F) des Einschnittes (5') zwischen 8 % und 55 % beträgt.

4. Fahrzeugluftreifen nach einem der Ansprüche 1 bis 3 mit einem Pitchlängenverhältnis von 1:1,16, **dadurch gekennzeichnet, dass** der Anteil jeder Gleitfläche (G) an der Gesamtschnittfläche (F) des Einschnittes (5') zwischen 8 % und 12 % beträgt.

5. Fahrzeugluftreifen nach einem der Ansprüche 1 bis 3 mit einem Pitchlängenverhältnis von 1:1,2, **dadurch gekennzeichnet, dass** der Anteil jeder Gleitfläche (G) an der Gesamtschnittfläche (F) des Einschnittes (5') zwischen 11 % und 15 % beträgt.

6. Fahrzeugluftreifen nach einem der Ansprüche 1 bis 3 mit einem Pitchlängenverhältnis von 1:1,353, **dadurch gekennzeichnet, dass** der Anteil jeder Gleitfläche (G) an der Gesamtschnittfläche (F) des Einschnittes (5') zwischen 20 % und 25 % beträgt.

7. Fahrzeugluftreifen nach einem der Ansprüche 1 bis 3 mit einem Pitchlängenverhältnis von 1:1,4, **dadurch gekennzeichnet, dass** der Anteil jeder Gleitfläche (G) an der Gesamtschnittfläche (F) des Einschnittes (5') zwischen 23 % und 30 % beträgt.

8. Fahrzeugluftreifen nach einem der Ansprüche 1 bis 3 mit einem Pitchlängenverhältnis von 1:1,6, **dadurch gekennzeichnet, dass** der Anteil jeder Gleitfläche (G) an der Gesamtschnittfläche (F) des Einschnittes (5') zwischen 45 % und 55 % beträgt.

9. Fahrzeugluftreifen nach einem der Ansprüche 1 bis 8, **dadurch gekennzeichnet, dass** der Gleitflächenanteil auf zwei Einschnitte (5') aufgeteilt ist.

## Claims

1. Pneumatic vehicle tyre for passenger cars, in particular for use in winter driving conditions, with a tread profile with at least one middle row of bars (1) running around in the circumferential direction, the tread bars (2) of which are respectively provided with at least three sipes (5, 5') of a small width that run substantially parallel to one another and substantially in the transverse direction of the tread and have at least in certain portions a wave-shaped or zigzag-shaped profile in plan view, the tread bars (2) being arranged within similar pitches (P₁, P₂), which are provided in at least two different circumferential lengths (LP₁, LP₂), the tread bars (2) having in accordance with the pitch lengths (L₁, L₂) at least two different circumferential lengths (LP₁, LP₂) within a range of 30 mm to 50 mm,
**characterized**
**in that** the tread bars (2) in pitches (P₂) that are longer than the shortest pitch (P₁) each have at least one middle sipe (5'), which has at the base of the sipe a portion (5'b) that extends in the radial direction and is bounded by planar sliding surfaces (G), the proportion of the overall sectional area (F) of the sipe (5') that is made up by the sliding areas (G) being dependent on the chosen pitch length ratio and being greater with greater pitch length ratios, the zigzag or wave form extending as far as the base of the sipe in the other sipes in the tread bar (2).

2. Pneumatic vehicle tyre according to Claim 1, **characterized in that** at least the/a sipe (5') running in the central region of the tread bar (2) is provided with sliding areas (G).

3. Pneumatic vehicle tyre according to Claim 1 or 2, **characterized in that** the proportion of the overall sectional area (F) of the sipe (5') that is made up by each sliding area (G) is between 8% and 55%.

4. Pneumatic vehicle tyre according to one of Claims 1 to 3, with a pitch length ratio of 1:1.16, **characterized in that** the proportion of the overall sectional area (F) of the sipe (5') that is made up by each sliding area (G) is between 8% and 12%.

5. Pneumatic vehicle tyre according to one of Claims 1 to 3, with a pitch length ratio of 1:1.2, **characterized in that** the proportion of the overall sectional area (F) of the sipe (5') that is made up by each sliding area (G) is between 11% and 15%.

6. Pneumatic vehicle tyre according to one of Claims 1 to 3, with a pitch length ratio of 1:1.353, **characterized in that** the proportion of the overall sectional area (F) of the sipe (5') that is made up by each sliding area (G) is between 20% and 25%.

7. Pneumatic vehicle tyre according to one of Claims 1 to 3, with a pitch length ratio of 1:1.4, **characterized in that** the proportion of the overall sectional area (F) of the sipe (5') that is made up by each sliding area (G) is between 23% and 30%.

8. Pneumatic vehicle tyre according to one of Claims 1 to 3, with a pitch length ratio of 1:1.6, **characterized in that** the proportion of the overall sectional area (F) of the sipe (5') that is made up by each sliding area (G) is between 45% and 55%.

9. Pneumatic vehicle tyre according to one of Claims 1 to 8, **characterized in that** the proportion composed of the sliding area is divided between two sipes (5').

## Revendications

1. Bandage pneumatique pour roue de voiture automobile, en particulier destiné à être utilisé en conditions hivernales,
avec un profil de bande de roulement qui présente au moins une rangée centrale (1) de blocs s'étendant dans la direction périphérique et dont chacun des blocs profilés (2) est doté de trois entailles (5, 5') s'étendant essentiellement en parallèle les unes aux autres et essentiellement dans la direction transversale de la bande de roulement, de faible largeur, présentant vues en plan un parcours au moins en partie en ondulations ou en zigzag,
les blocs profilés (2) étant disposés à l'intérieur de pas similaires (P₁, P₂) prévus à au moins deux longueurs périphériques (LP₁, LP₂) différentes, les blocs profilés (2) présentant en correspondance à la longueur (L₁, L₂) des pas au moins deux longueurs périphériques (LP₁, LP₂) différentes dans une plage de 30 mm à 50 mm,
**caractérisé en ce que**
les blocs profilés (2) des pas (P₂) plus longs que le pas (P₁) le plus court présentent chacun au moins une entaille centrale (5') qui présente sur le fond de l'entaille une partie (5'b) qui s'étend dans la direction radiale et délimitée par des surfaces planes de glissement (G), le rapport entre les surfaces de glissement (G) et la surface totale de coupe (F) de l'entaille (5') dépendant du rapport sélectionné pour la longueur du pas, et étant plus grand pour des rapports plus élevés de longueur de pas, la forme de zigzag ou d'ondulations s'étendant dans les autres entailles du bloc profilé (2) jusqu'au fond de l'entaille.

2. Bandage pneumatique pour roue de véhicule selon la revendication 1, **caractérisé en ce qu'**au moins la ou une entaille (5') s'étendant dans la partie centrale du bloc profilé (2) est dotée de surfaces de glissement (G).

3. Bandage pneumatique pour roue de véhicule selon les revendications 1 ou 2, **caractérisé en ce que** le rapport entre chaque surface de glissement (G) et la surface totale de coupe (F) de l'entaille (5') est comprise entre 8 % et 55 %.

4. Bandage pneumatique pour roue de véhicule selon l'une des revendications 1 à 3, présentant un rapport de longueur de pas de 1:1,16, **caractérisé en ce que** le rapport entre chaque surface de glissement (G) et la surface globale de coupe (F) de l'entaille (5') est compris entre 8 % et 12 %.

5. Bandage pneumatique pour roue de véhicule selon l'une des revendications 1 à 3, présentant un rapport de longueur de pas de 1:1,2, **caractérisé en ce que** le rapport entre chaque surface de glissement (G) et la surface globale de coupe (F) de l'entaille (5') est compris entre 11 % et 15 %.

6. Bandage pneumatique pour roue de véhicule selon l'une des revendications 1 à 3, présentant un rapport de longueur de pas de 1:1,353, **caractérisé en ce que** le rapport entre chaque surface de glissement (G) et la surface globale de coupe (F) de l'entaille (5') est compris entre 20 % et 25 %.

7. Bandage pneumatique pour roue de véhicule selon l'une des revendications 1 à 3, présentant un rapport de longueur de pas de 1:1,4, **caractérisé en ce que** le rapport entre chaque surface de glissement (G) et la surface globale de coupe (F) de l'entaille (5') est compris entre 23 % et 30 %.

8. Bandage pneumatique pour roue de véhicule selon l'une des revendications 1 à 3, présentant un rapport de longueur de pas de 1:1,6, **caractérisé en ce que** le rapport entre chaque surface de glissement (G) et la surface globale de coupe (F) de l'entaille (5') est compris entre 45 % et 55 %.

9. Bandage pneumatique pour roue de véhicule selon l'une des revendications 1 à 8, **caractérisé en ce que** le rapport de surface de glissement est réparti sur deux entailles (5¹).
